# EUROPÄISCHE PATENTSCHRIFT

(11) **EP 2 181 308 B1**
(45) Veröffentlichungstag und Bekanntmachung des Hinweises auf die Patenterteilung: **09.10.2019**
(21) Anmeldenummer: 08801138.2
(22) Anmeldetag: 07.08.2008
(51) Int. Cl.: G01D 5/14, G01D 5/245

(54) **UMDREHUNGSZÄHLER MIT EINEM FERROMAGNETISCHEN ELEMENT**
REVOLUTION COUNTER WITH A FERROMAGNETIC ELEMENT
COMPTEUR DE TOURS À ÉLÉMENT FERROMAGNÉTIQUE

(30) Priorität: 17.08.2007 DE 102007039050
(43) Veröffentlichungstag der Anmeldung: 05.05.2010
(73) Patentinhaber: AVAGO TECHNOLOGIES INTERNATIONAL SALES PTE. LIMITED, Singapur 768923 (SG)
(72) Erfinder: Mehnert, Walter, 85521 Ottobrunn (DE); Theil, Thomas, 85258 Weichs (DE)
(74) Vertreter: Dilg, Haeusler, Schindelmann Patentanwaltsgesellschaft mbH
(86) Internationale Anmeldenummer: PCT/DE2008/001305
(87) Internationale Veröffentlichungsnummer: WO 2009/024119

(56) Entgegenhaltungen:
- EP-A- 1 607 720
- WO-A-2004/046735
- DE-A1- 3 619 500
- DE-A1- 19 722 016
- DE-U1-202007 006 955
- GB-A- 2 071 337
- US-A- 2 235 393
- US-A- 5 148 106

## Beschreibung

Die Erfindung betrifft einen absoluten Umdrehungszähler mit einem ferromagnetischen Element, der in beiden Bewegungsrichtungen zählt.

WO 2004/046735 A1 offenbart einen Positionsdetektor. Gemäß einer ersten Ausführungsform eines Positionsdetektors der WO 2004/046735 A1 ist ein sich bewegender Körper eine Welle, die sich im Uhrzeiger- oder im Gegenuhrzeigersinn drehen kann. Um die Drehungen der Welle zählen zu können, ist dieser ein einen Nordpol und einen Südpol aufweisender Erregermagnet zugeordnet. Über ferromagnetische Flussleitstücke, deren erste Enden auf dem vom Erregermagneten beschriebenen Kreisbogen liegen und deren zweite Enden den Stirnseiten eines ferromagnetischen Elements zugewandt sind, kann das ferromagnetische Element durch das vom Erregermagneten erzeugte magnetische Feld beeinflusst werden. Das parallel zur Bewegungsrichtung des Erregermagneten ausgerichtete ferromagnetische Element ist von zwei Sensorspulen umgeben, an deren Ausgangsklemmen die beim Passieren des Erregermagneten infolge Ummagnetisierung des ferromagnetischen Elementes erzeugten Spannungsimpulse entsprechender Polarität abnehmbar sind. Als zusätzliches Sensorelement zur Ermittlung der Auslöserichtung der Ummagnetisierung dient hier die zweite Induktionsspule. Aus dem zeitlichen Versatz der Spannungsmaxima der beiden Spulen ist die Auslöserichtung der Ummagnetisierung und damit die Position des Erregermagneten gegeben. Als ferromagnetisches Element dient hier ein Impulsdraht. Gemäß einer weiteren Ausführungsform der WO 2004/046735 A1 ist dem ferromagnetischen Element lediglich eine Sensorspule zugeordnet. Zwecks Feststellung der Position des Erregermagneten bei der Passage des ferromagnetischen Elementes ist hier als zusätzliches Sensorelement eine Hall-Sonde vorgesehen, an deren Ausgang entweder ein Signal abnehmbar ist oder nicht. Die Polarität wird hier wie bei der ersten Ausführungsform durch die Spule des ferromagnetischen Elementes bestimmt. Die zum Zeitpunkt Ts zur Verfügung stehenden vollständigen Informationen zur Ermittlung der Polarität und Bewegungsrichtung des Erregermagneten bestehen daher aus den Daten im nichtflüchtigen Speicher mit den Signalen an den Ausgangsklemmen der Induktionspulen oder mit den Signalen an den Ausgangsklemmen der Induktionsspule und den Ausgangsklemmen der Hall-Sonde. Gemäß einer weiteren Ausführungsform des Positionsdetektors gemäß der WO 2004/046735 A1 sind der Welle zur Erhöhung der Auflösung vier rechtwinklig zueinander angeordnete Erregermagnete zugeordnet, und zwar mit wechselnder Polarität. Auf diese Weise wird beim Drehen der Welle den Stirnseiten des ferromagnetischen Elementes über die Flussleitstücke wechselweise ein Nord- bzw. ein Südpol gegenüberstehen. Die notwendige Hall-Sonde zur Bestimmung der Position des Erregermagneten ist hier den abgewandten Enden der Erregermagnete zugeordnet. Gemäß einer weiteren Ausführungsform der WO 2004/046735 A1 sind die dem Erregermagneten gegenüberstehenden Enden der Flussleitstücke FL1 und FL2 über 180° angeordnet. Die Energieversorgung für die Auswerteelektronik erfolgt in der Regel aus den Signalen der Induktionsspulen. Den Positionsdetektoren ist gemäß WO 2004/046735 A1 eine Auswerteelektronik zugeordnet, deren Eingangsklemmen mit den Sensorspulen bzw. mit der einen Sensorspule und der Hall-Sonde verbunden sind. Den Eingangsklemmen ist jeweils eine Erkennungslogik nachgeschaltet. Dem Eingang ist über einen Gleichrichter zusätzlich ein Kondensator für die Energieversorgung zugeschaltet. Die Signale aus den Erkennungslogiken werden in einem Zähler ausgewertet, dem ein nichtflüchtiger Speicher zugeordnet ist. Dabei wird unter Einbeziehung der in den eingespeicherten Daten enthaltenen Vorgeschichte und der von den Erkennungslogiken gelieferten Informationen über die aktuelle Position und Polarität des Erregermagneten ein neuer Zählerstand gewonnen, der dann in den nichtflüchtigen Speicher, der im allgemeinen ein FRAM darstellt, übertragen wird.

DE 36 19 500 A1 offenbart einen elektromagnetischen Drehzahlgeber mit folgendem: eine drehbar angeordnete Welle; ein Dauermagnet, der an einem Ende der Welle so befestigt ist, dass seine Magnetisierungsrichtung senkrecht zur Wellenachse orientiert ist; und einen Spulenkern, der von einer Spule axial umschlossen ist und der ortsfest in einem Abstand A neben dem Dauermagneten angeordnet ist. Die Länge des Dauermagneten ist etwas größer als die Länge des Spulenkerns, so dass das Streufeld des Dauermagneten den Spulenkern durchsetzt, wenn der Dauermagnet parallel zum Spulenkern steht. DE 20 2007 006 955 U1 offenbart eine Vorrichtung zur Messung von Drehbewegungen mit folgendem: eine drehbar angeordnete Welle; eine als kreisförmige Platte aus einem nicht ferromagnetischen Material ausgebildete Aufnahme; zwei Dauermagneten, die in Bezug auf die Drehachse der Welle diametral gegenüberstehend auf der Aufnahme angeordnet sind; und einen Magnetfelssensor, der auf einer axialen Verlängerung der Welle angeordnet ist und zur Detektierung der Winkelorientierung des durch die Dauermagneten verursachten Magnetfelds dient. Die Ausdehnung der Dauermagnete in einer Axialebene ist größer als deren Breite senkrecht zur Axialebene, so dass die Dauermagnete über deren gesamte Länge ein relativ homogenes Magnetfeld im Bereich zwischen den Dauermagneten erzeugt. Weder in der DE 36 19 500 A1 noch in der DE 20 2007 006 955 U1 weist der Dauermagnet bzw. die Anordnung der Dauermagnete einen ferromagnetischen Rückschlusskörper auf.

GB 2 071 337 A offenbart einen Linear-Positionskodierer mit bistabilen magnetischen Elementen in verschiedenen Ausführungsformen. In einer Ausführungsform umfasst der Linear-Positionskodierer einen feststehenden, ersten hufeisenförmigen Dauermagneten, dessen distale Enden einen Nordpol und einen Südpol ausbilden; einen flachen, stab-ähnlichen Träger, der zwischen den Polen des Dauermagneten linear hin-und-her beweglich angeordnet ist; eine Mehrzahl von Wieganddrähten, die und auf einer Oberfläche des Trägers parallel zueinander in regelmäßigen Abständen und senkrecht zu der Bewegungsrichtung des Trägers angeordnet sind; und eine Mehrzahl von Sensorwicklungen und Rücksetzwicklungen, wobei jeder Wieganddraht von einer Sensorwicklung und einer Rücksetzwicklung 4 axial umschlossen ist. Der hufeisenförmige Dauermagnet weist keinen gesondert vorgesehenen, ferromagnetischen Rückschlusskörper auf.

EP 1 607 720 A2 offenbart einen Lenkwinkelsensor zur Bestimmung des absoluten Lenkwinkels eines Fahrzeugs in mehreren Ausführungsformen. Allgemein umfasst der Lenkwinkelsensor einen mit einer Lenkwelle oder einem Lenkrad drehgekoppelten Rotor, der eine Abtasteinheit zur Abtastung einer rotorseitigen Winkelcodierung zur Bestimmung eines relativen Drehwinkels und eine Zähleinheit zur Abtastung einer Inkrementcodierung aufweist. Die Inkrementcodierung umfasst einen Magnetabschnitt, der wenigstens ein Magnetpolpaar umfasst. Die Zähleinheit umfasst wenigstens ein ferromagnetisches Element und eine um das ferromomagnetische Element herum angeordnete Induktionsschleife, und ferner einen, wobei beim Vorbeiführen des Magnetabschnitts an dem ferromagnetischen Element eine schlagartige Ummagnetisierung erfolgt, wodurch an der Induktionsschleife genügend Energie zur Aktivierung des Zählspeichers bereitgestellt wird. In einer Ausführungsform des Lenkwinkelsensors weist der Magnetabschnitt (oder multipolare Magnetring) eine Mehrzahl von Magnetabschnitten in der Form von Magnetpolsegmenten auf, die äquidistant zu einander und mit wechselnder Polarisierung an einer äußeren Mantelseite angeordnet sind. Dabei sind zur Bestimmung des relativen Drehwinkels zwei analoge Magnetfeldsensoren vorgesehen, die zu den Magnetsegmenten phasenversetzt angeordnet sind und sinus- und kosinusförmige, zueinander phasenversetzte Ausgangssignale erzeugen, aus deren Signalverläufen der Lenkwinkel innerhalb eines bestimmten Umdrehungsabschnitts eindeutig bestimmt werden kann. In einer anderen Ausführungsform des Lenkwinkelsensors ist der Magnetabschnitt als bipolare Magnetanordnung ausgebildet. Zur Bestimmung des relativen Drehwinkels ist ein als analoger Doppelsensor ausgebildeter Magnetfeldsensor vorgesehen, der bei Drehung der Magnetanordnung kosinus- und sinusförmige Signale erzeugt. Ferner sind zwei Magnetfeldsensoren, die unter einem Winkel von ca. 90° bezüglich der Drehachse angeordnet sind und zur Drehrichtungserkennung des Rotors dienen; und eine die Zähleinheit ausbildende, gekreuzte Doppelanordnung von jeweils einem ferromagnetischen Element (Draht) und dieses umgebende Spulenkörper mit Spulen vorgesehen.

DE 197 22 016 A1 offenbart eine Anordnung zur berührungslosen Drehwinkelerfassung eines drehbaren Elements, wie etwa einer Welle. Die Anordnung umfasst einen drehbaren Teil und einen feststehenden Drehwinkelsensor. Der drehbare Teil umfasst die drehbare Welle und eine zylinderförmig ausgestaltete Scheibe, sowie zwei Magnete, die einander diametral gegenüberliegend auf der Scheibe angeordnet sind bzw. einen Magneten, dessen Pole über die Scheibe magnetisch gekoppelt sind, deren Polarität und Anordnung so ist, dass sich zwischen den Magneten ein näherungsweise homogenes Magnetfeld ausbildet, das sich mit der Welle dreht. Der feststehende Drehwinkelsensor umfasst einen Träger, auf dem ein erstes und ein zweites Sensorelement und angeordnet sind. Das erste Sensorelement umfasst ein sensitives Element, das unter Ausnutzung des magnetoresistiven Effekts zur Ermittlung des Winkels zwischen dem Magnetfeld und dem Drehwinkelsensor arbeitet. Das Sensorelement umfasst die Auswerteschaltung für das magnetoresistive Element und zusätzlich eine sensitive Einheit, die nach dem Halleffekt arbeitet und zur Erkennung der Winkelbereiche dient, in denen der Winkelsensor arbeitet. Diese Anordnung umfasst kein Wiegandelement.

Ein absoluter Umdrehungszähler gewinnt seine Zählinformation, die er dauerhaft abspeichert, ohne Hilfe externer elektrischer Energie. Die zum Zählen und Abspeichern benötigte elektrische Energie generiert er aus der kinetischen Energie des Antriebes, und das unter allen Bedingungen, also auch bei Geschwindigkeiten gegen Null. Die Anzahl der zu erfassenden und abzuspeichernden Umdrehungen ist dabei in physikalischer Hinsicht unbegrenzt.

Ferromagnetische Elemente für das Erfassen von translatorischen und/oder rotatorischen Bewegungen sind, wie in der US 4,364,013 dargestellt, als sogenannte Impulsdraht-Bewegungsmelder oder wie in der DE 4 107 847 C1 oder der DE 2 817 169 C2 dargestellt, als Wiegand-Sensoren bekannt, bei denen ein vorbehandelter Draht aus ferromagnetischem Material von einer Sensorspule umwickelt ist. Die im ferromagnetischen Material zunächst unregelmäßig orientierten magnetischen Bereiche - als magnetische Domänen oder auch als Weißsche Bereiche bekannt - richten sich unter dem Einfluss äußerer mechanischer und/oder Magnetkräfte zu einer einzigen Domäne aus. Beim Anlegen eines äußeren Magnetfeldes von bestimmter Richtung und Größe "klappt" diese Domäne "schlagartig" um, was zu einem als Ausgangssignal abnehmbaren Spannungsimpuls in der Sensorspule führt.

In ferromagnetischen Materialien ist die Wechselwirkung der magnetischen Momente benachbarter Atome mit unterschiedlicher Magnetisierungsrichtung sehr stark, was zur Ausrichtung der Momente in kleinen Raumbereichen führt. Die bereits erwähnten magnetischen Domänen, das ferromagnetische Element, Weißsche Bezirke oder - Bereiche, sind durch als Blochwände bezeichnete Übergangsschichten von mehreren hundert Atomen voneinander getrennt. Durch den Einfluss äußerer Kräfte kann - wie vorstehend ausgeführt - erreicht werden, dass sich die erwähnte einzige Domäne, das ferromagnetische Element, ausbildet. Wird eine solche Domäne in ein äußeres magnetisches Feld bestimmter Größe und Richtung gebracht, dann klappen die Elementarmagnete von einer Ausgangsposition der Stelle des größten Magnetfeldes - normalerweise ein Drahtende - aus dominoartig in Richtung des äußeren Feldes um, was zu einer Umklappwelle endlicher Geschwindigkeit in dem ferromagnetischen Element führt, die aber groß gegenüber der Geschwindigkeit des erregenden Magneten ist, sodass von einem "schlagartigem Umklappen" dieser Domäne gesprochen werden darf. Die Stelle des größten Magnetfeldes kann auch die Längsmitte einer drahtförmigen Domäne sein. Dann laufen zwei Wellen von der Mitte zu den Enden, die zur doppelt abnehmbaren Spannung führen.

Der vorstehend genannte Effekt der über das ferromagnetische Element laufenden Blochwand wird nach der DE 102 59 223 zur Ermittlung der Polarität und der Position des Erregermagneten benutzt, indem durch ein zusätzliches Sensorelement z. B. die Auslöserichtung der von beiden Stirnseiten aus initiierbaren Ummagnetisierung des ferromagnetischen Elementes, also die Ausrichtung der Ummagnetisierung des ferromagnetischen Elements bestimmt wird.

Im allgemeinen Fall, der gekennzeichnet ist durch einen Erregermagneten und der Auflösung von ½ Umdrehung, ist ein Umdrehungszählersystem durch vier mögliche Erregermagnetzustände in Verbindung mit abgespeicherten Informationen unter allen Bedingungen vollständig beschrieben, nämlich
1. Nordpol rechts am ferromagnetischen Element
2. Nordpol links am ferromagnetischen Element
3. Südpol rechts am ferromagnetischen Element
4. Südpol links am ferromagnetischen Element

Diese vier Erregermagnetzustände sind bei rotativen Systemen erfüllt, wenn eindeutig abstrahierbar ist, welcher Magnetpol in welchen der vier Quadranten liegt. Hierzu bedarf es vier ortsgebundener unabhängiger Informationen, wovon zwei immer aus der Spule SP als Polarität der auftretenden Spannungen gewonnen werden. Die restlichen zwei aus der Hall-Sonde SE als Magnetpolarität oder Magnet erkannt bzw. nicht erkannt.

Geht man von dem mathematisch theoretischen Fall aus, dass die Wiegand- bzw. Impulsdrähte immer einwandfrei arbeiten, dann muss bei dem hier vorgestellten U-Zähler mit einem Wiegandelement und einem zusätzlichen Sensorelement bei der Ermittlung eines Zählwerts für beide Richtungen nicht auf gespeicherte Informationen zurückgegriffen werden. Dieser theoretische Fall wird bei der Lösung mit zwei Impuls- oder Wieganddrähten stillschweigend vorausgesetzt, wie z. B. im europäischen Patent EP 0 724 712 ausgeführt. Leider ermöglicht die Physik diesen theoretischen Fall nicht, weil es immer Bewegungsabläufe gibt, bei denen der entsprechende Wiegand bzw. Impulsdraht durch Erzeugen von "Kümmerlingen" versagt. Bei der vorgestellten Lösung mit einem Wiegandelement und z. B. einer Hallsonde muss nur dann auf abgespeicherte Informationen zurückgegriffen werden. Die im oben genanntem Patent angeführte Lösung mit zwei Wiegand- oder Impulsdrähten führt hingegen auch bei Rückgriff auf abgespeicherte Informationen zu einem falschen Zählergebnis, weil die abgespeicherten Informationen bereits für den idealisierten Zählfall gebraucht werden.

Durch diese Maßnahmen ist ein Positionsdetektor mit denkbar einfachen mechanischem Aufbau realisierbar, der auch bei Geschwindigkeiten gegen Null und Ausfall der regulären Stromversorgung mit nur einem ferromagnetischen Element in beiden Bewegungsrichtungen des Erregermagneten unter allen Bedingungen einwandfrei arbeitet. Diese optimal einfache Gestaltung eines Positionsdetektors ermöglicht es auch, aus den Ausgangssignalen der Sensorspule gleichzeitig die Energie für die eine Zählvorrichtung umfassende Auswerteelektronik zu erhalten.

Trotz des grundsätzlich möglichen und denkbar einfachen mechanischen Aufbaus solcher Detektoren hat die Erfahrung gezeigt, dass die sich erweiternden Anwendungsgebiete eine Miniaturisierung ihrer Bauelemente bei gleichzeitiger magnetischer Abschirmung gegenüber Fremdeinflüssen erfordert ohne dabei die Vorteile der von Fremdenergie unabhängigen langlebigen Ausbildung aufzugeben. Zugleich aber ist es notwendig - wegen der Verwendung von Zusatzsensoren zu einem Multiturn - die Magnetfelder zu linearisieren und homogenesieren.

Die vorteilhafte Weiterbildung solcher Detektoren als Linearsegment- oder Umdrehungszähler ist daher Aufgabe der Erfindung.

Diese Aufgabe ist durch die Merkmale des Patentanspruchs 1 gelöst.

Weitere Merkmale der Erfindung ergeben sich aus den Unteransprüchen.

Wie beansprucht, wird ein absoluter Linearsegment- oder Umdrehungszähler bereitgestellt, der insbesondere folgendes umfasst: mindestens einen sich bewegenden Erregermagneten; ein Wiegandelement bestehend aus einem ferromagnetischen Element, das von einer Induktionsspule axial umschlossen ist; mindestens eine zusätzliche Sensoreinheit; und mindestens eine Zähleinheit mit nichtflüchtigem Datenspeicher; zur Ermittlung von vollständigen Informationen für einen Zählwert und zur Eigenversorgung mit Energie für eine Verarbeitungselektronik, die Zähleinheit und das zusätzliche Sensorelement (SE). Die Bauelemente, insbesondere der Erregermagnet, das Wiegandelement und die zusätzliche Sensoreinheit sind derart ausgebildet und angeordnet, dass das Wiegandelement mit der Achse seiner Spule und das zusätzliche Sensorelement mindestens einmal pro Segmentüberstreichung oder pro Umdrehung in Richtung des Hauptfeldes des mindestens einen Erregermagneten liegt, dessen magnetischer Rückschluss über einen ferromagnetischen Rückschlusskörper gebildet ist.

Erfindungsgemäß befindet sich die Längsmitte der Spule in der Dreh- bzw. Bewegungsachse innerhalb des Hauptfeldes, und der ferromagnetische Rückschlusskörper ist einer der folgenden: bei der Ausbildung des Zählers als Umdrehungszähler ein den Erregermagneten bzw. Erregermagnete umfassender geschlossener Ring aus Weicheisen mit hohem µᵣ oder eine den Umdrehungszähler abdeckende, geschlossene, aus Weicheisen ausgebildete Haube, oder bei der Ausbildung des Zählers als Linearsegmentzähter ein Rahmen aus Weicheisen mit u-förmigen Querschnitt.

In Folge der erfindungsgemäßen Anordnung des Wiegandelements im Hauptfeld eines oder zwischen zwei Erregermagneten, deren magnetischer Rückschluss über einen gemeinsamen, vorzugsweise als geschlossener Ring, ausgebildeten ferromagnetischen Rückschlusskörper gebildet ist, wird sowohl ein in mechanischer als auch magnetischer Hinsicht symmetrisch ausgebildeter Umdrehungszähler geschaffen, der, weil er eine Reihe unverzichtbarer Vorteile aufweist, kleinste Dimensionen erreicht, damit kostengünstig ist und auch die Erfassung höchster Drehzahlen ermöglicht.

Diese Vorteile sind im Einzelnen:
1. Das Wiegandelement ist abgeschirmt gegen:
   a) externe magnetische Felder;
   b) externe elektrische Felder;
   c) den Einfluss externer ferromagnetischer Elemente, die das Hauptfeld verziehen;
2. Das Magnetfeld wird in der Umgebung des Wiegandelements linearisiert und homogenisiert.

Das Hauptfeld verbindet dabei entweder die Austrittsflächen der beiden Erregermagnete oder die Austrittsfläche eines Erregermagneten mit der Eintrittsfläche des ferromagnetischen Ausgleichskörpers, wobei die Normale in Richtung des Wiegand-Elements weisen. Als Hauptfeld wird der in Richtung der Magnetisierungsnormale austretende Magnetfluss bezeichnet, wobei die Normale senkrecht zur Drehachse steht. Die Magnetisierungsnormale ist in den Zeichnungen mit der Achse des ferromagnetischen Elements FE identisch.

Der geschlossene Ring kann hierbei gleichzeitig als den Umdrehungszähler abdeckende Haube ausgebildet sein. Besonders vorteilhaft ist die Anordnung des zusätzlichen Sensorelementes im Hauptfeld zwischen den zwei Erregermagneten, so dass dieses mindestens einmal pro Umdrehung in dem Hauptfeld zu liegen kommt. Die Ermittlung der Polarität und Position der Erregermagneten ist also stets sichergestellt. Die Erregermagnete bestehen erfindungsgemäß aus kunststoffgebundenen hartmagnetischen Material. Hier sind als Grundmaterialien Ba-Ferrit und Co/Sm günstig. Zu den üblichen verwendeten Kunststoffen zählen auch Gummimaterialien. Vorteilhafterweise kann das zusätzliche Sensorelement auch derart angeordnet sein, dass es mindestens einmal pro Umdrehung im Streufeld nur eines der beiden Erregermagnete liegt. Das zusätzliche Sensorelement ist vorteilhaft als Hallsonde oder als Feldplatte ausgebildet, kann aber auch jede andere Art von Sensor sein, der die entsprechende Lage des Erregermagneten eindeutig erkennt, z. B. kapazitive Sensoren.

Allen Ausführungsformen des erfindungsgemäßen Umdrehungszählers ist gemeinsam, dass die für den Betrieb notwendige Energie für das Zählen aus der kinematischen Energie des Antriebs erzeugt wird, also diese auf externe Energiezufuhr nicht angewiesen sind.

Für den Fall, dass die Reaktionszeit des zusätzlichen Sensorelements größer ist als die Dauer des Spannungspulses aus dem ferromagnetischen Element, dann ist ein Energiespeicher erforderlich. So z. B. bei Benutzung einer Hallsonde nach heutigem Stand. Zusätzliche Sensorelemente auf kapazitiver Basis oder Feldplatte benötigen keinen Energiespeicher; aus Gründen der Zuverlässigkeit kann man auf einen derartigen Energiespeicher zurückgreifen.

Allen Ausführungsformen des erfindungsgemäßen Umdrehungszählers ist auch die zentrische Anordnung gemeinsam, bei der ein oder mehrere Erregermagnete um einen

Zentralbereich rotieren, in dem sich zumindest das Wiegandelement befindet.

Selbstverständlich sind auch redundante Ausführungsformen mit zwei Wiegandelementen und zwei Hallsonden sowie einem Magnetpaar, dessen Magnete diametral gegenüberliegen realisierbar. In diesem Fall ist es aus Platzgründen günstig, die jeweils eine Spule in zwei Halbspulen zu spalten, so dass hier kreuzweise um die Drehachse angeordnete Spulen entstehen. Die beiden ferromagnetischen Elemente liegen hierbei ebenfalls über Kreuz in einer Ebene.

Die Erfindung ist nachfolgend anhand von sechs in der Zeichnung mehr oder minder schematisch dargestellter Ausführungsbeispiele beschrieben. Es zeigen:
- Fig.1: als Draufsicht den schematischen Aufbau eines ersten Ausführungsbeispiels eines Umdrehungszählers gemäß der Erfindung mit einem Wiegand-Element, bestehend aus einem ferromagnetischen Element und einer dem ferromagnetischen Element axial zugeordneten Induktionsspule im Hauptfeld von einem Erregermagneten, und einer als zusätzliches Sensorelement dienenden Hallsonde im Hauptfeld, dazu einen ringförmigen ausgewuchteten ferromagnetischen Rückschlusskörper, an dessen Innenseite ein segmentartiger Erregermagnet konstanter Dicke angeordnet ist,
- Fig.2: den Umdrehungszähler nach Figur 1 im Querschnitt,
- Fig.3: als Draufsicht den schematischen Aufbau eines zweiten Ausführungsbeispiels eines Umdrehungszählers mit einer Hallsonde als einem zusätzlichen Sensorelement im Streufeld, einen geschlossenen ringförmigen ferromagnetischen Rückschlusskörper mit zwei gleichen Erregermagneten an der Innenseite des Rings,
- Fig.4: den Umdrehungszähler nach Figur 3 im Querschnitt,
- Fig. 5: als Draufsicht den schematischen Aufbau eines dritten Ausführungsbeispiels eines Umdrehungszählers gemäß der Erfindung mit einem Wiegand-Element im Hauptfeld zwischen zwei Erregermagneten, einem zusätzlichen Sensorelement im Streufeld sowie einem Zusatzsensor im Hauptfeld, der im Rahmen eines Multiturns zur Feinauflösung einer Umdrehung dient, sowie einen ringförmigen Rückschlusskörper mit an der Innenseite angebrachten zwei gleichen Erregermagneten, die aber in Richtung der Drehachse verschiedene Dicken aufweisen,
- Fig. 6: den Umdrehungszähler nach Figur 5 im Querschnitt,
- Fig. 7: als Draufsicht den schematischen Aufbau eines vierten Ausführungsbeispiels eines Umdrehungszählers gemäß der Erfindung mit einem zwischen zwei Erregermagneten angeordneten Wiegand-Element und mit einem zusätzlichen Sensorelement in Form einer Hallsonde im Hauptfeld, bei dem der ferromagnetische Rückschlusskörper als Abdeckhaube des Umdrehungszählers ausgebildet ist, und die beiden gleichen Erregermagneten an der Innenseite des Magnetträgers angebracht sind,
- Fig. 8: den Umdrehungszähler nach Figur 7 im Querschnitt.

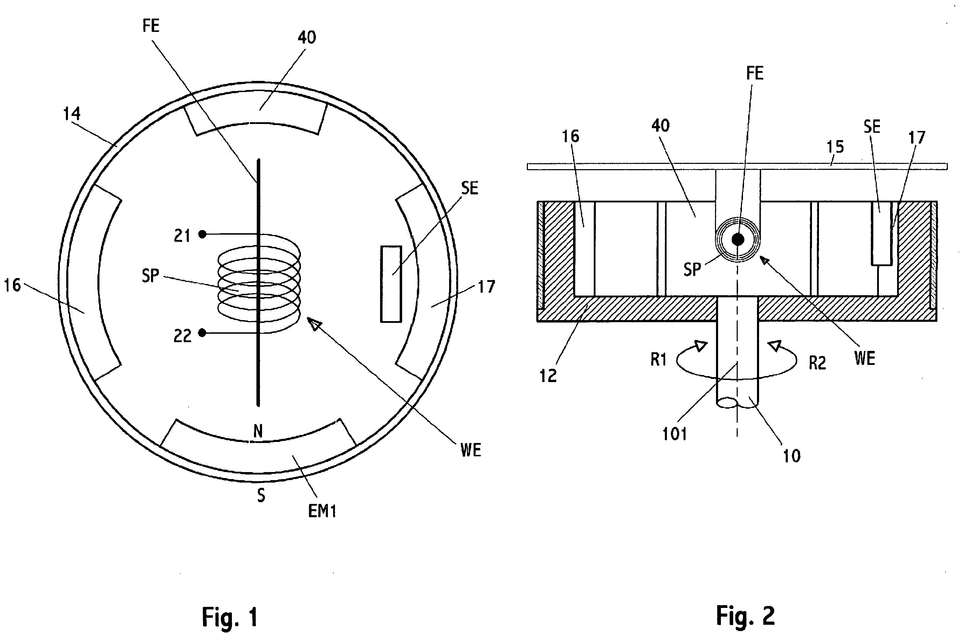

Bei der in den Figuren 1 und 2 gezeigten ersten Ausführungsform eines Umdrehungszählers ist der sich bewegende Körper eine Welle 10, die sich in Richtung der Pfeile R1 und R2, also im Uhrzeiger- oder im Gegenuhrzeigersinn drehen kann. Um die Drehungen der Welle 10 zählen zu können, ist diese mit einem Magnetträger 12 fest verbunden, dem ein kreissektorförmig ausgebildeter Erregermagnet EM₁ zugeordnet ist, der einen Nordpol N und einen Südpol S aufweist. Welcher Pol zum Wiegand-Element WE schaut, ist frei wählbar. Der Erregermagnet ist von einem als ferromagnetischen Rückschlusskörper 14 ausgebildeten mit Hilfe eines ferromagnetischen Ausgleichskörpers 40 ausgewuchteten Ring umfasst, dessen Radius mit dem Radius des kreissektorförmig ausgebildeten Erregermagneten EM₁ korrespondiert. Im Hauptfeld des Erregermagneten EM₁ befindet sich ein Wiegand-Element WE, bestehend aus einem ferromagnetischen Element FE, das von einer Sensorspule SP axial umschlossen ist und einem zusätzlichen Sensorelement (SE) in Form einer Hallsonde im Hauptfeld des Erregermagneten EM₁. Das Wiegand-Element WE mit zusätzlichem Sensorelement (SE) wird von einer Platine 15 derart in das Hauptfeld zwischen dem Erregermagneten EM₁ und dem Ausgleichskörper 40 gehalten, dass sein ferromagnetisches Element FE diesen Austrittsflächen zugewandt ist und damit von dem Erregermagnetfeld axial durchsetzt werden kann.

Das Wiegand-Element befindet sich also bei einer Stellung so im magnetischen Hauptfeld des Erregermagneten EM₁, dass die Normale der Austrittsflächen in Richtung des ferromagnetischen Elementes FE weist. An den Ausgangsklemmen 21 und 22 der Sensorspule SP sind die in Folge der Ummagnetisierung des ferromagnetischen Elementes FE erzeugten Spannungsimpulse abnehmbar.

Die weiteren Kreissektorenstücke 16 und 17 sind Rotationssymmetrie bewirkende nichtmagnetische Teile des Magnetträgers 12 und halten den ringförmigen Rückschlusskörper 14. Der ringförmige Rückschlusskörper 14 ist an einer Stelle sektorförmig verdickend durch einen Ausgleichskörper 40 ausgewuchtet und dient gleichzeitig zur Homogenisierung des Erregermagnetfelds.

Ein solcher Umdrehungszähler weist beispielsweise einen Durchmesser von 10-15 mm auf und kann mit Umdrehungszahlen bis über 100.000 Um/min betrieben werden.

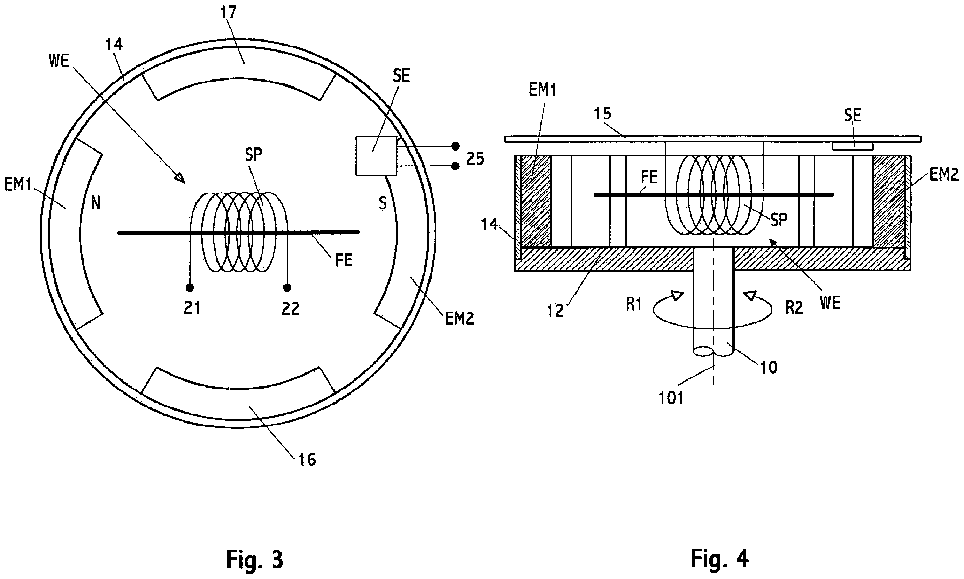

In der Ausführungsform nach den Figuren 3 und 4 tragen einander entsprechende Bauelemente gleiche Bezugsziffern wie bei der Ausführungsform nach den Figuren 1 und 2. Unterschiedlich ist jedoch, dass das Wiegandelement WE im Hauptfeld zwischen zwei Erregermagneten (EM₁, EM₂) angeordnet ist. Zwecks Feststellung der Polarität des Erregermagneten bei der Passage des ferromagnetischen Elemtes FE ist hier als zusätzliches Sensorelement SE eine Hallsonde vorgesehen, an dessen Ausgang 25, je nach Polarität N oder S der Erregermagnete und deren Stellung ein positives, ein negatives oder ein Nullsignal abnehmbar ist. Die beiden gleichen diametral an der Innenseite des ringförmigen Rückschlusskörpers 14 angebrachten Erregermagnete EM₁ und EM₂ bilden bei der Lösung mit einem Zusatzsensor ZS in Bezug auf ein homogenes Hauptfeld, das das ferromagnetische Element in der Längsmitte zündet, eine optimale Lösung.

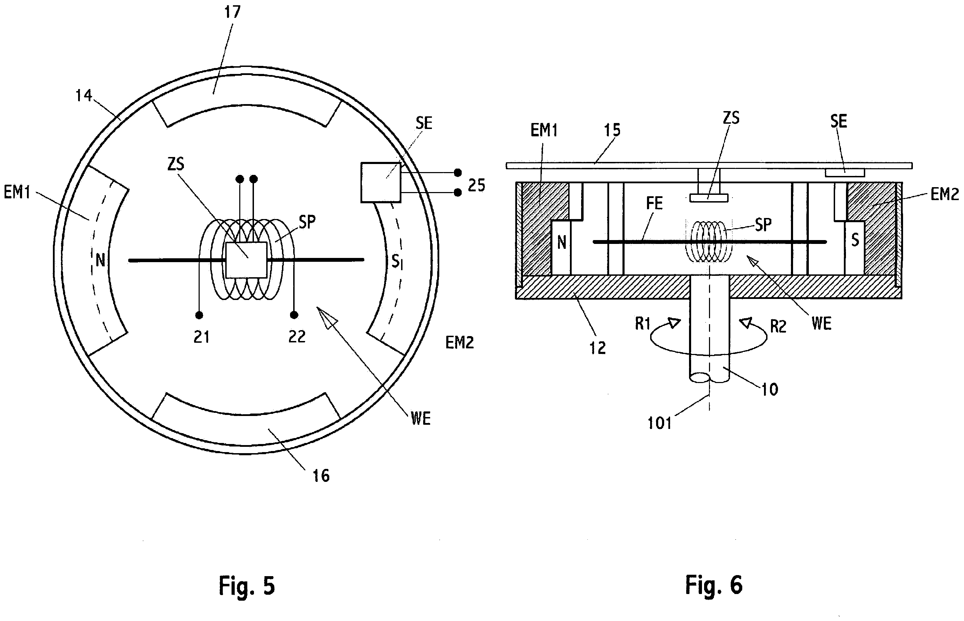

Auch das Ausführungsbeispiel des Umdrehungszählers nach Figuren 5 und 6 weist die zu den vorstehend beschriebenen Ausführungsbeispielen nach Figuren 3 und 4 entsprechenden Bauelemente auf, jedoch ist dort ein Zusatzsensor ZS vorhanden, der die Feinauflösung einer Umdrehung übernimmt. Da dieser auch im Hauptfeld zwischen den beiden Erregermagneten EM₁, EM₂ liegt, ist dieser ebenfalls elektromagnetisch geschirmt. Dazu sieht er ein nahezu homogenes Magnetfeld, was erregermagnetisch bedingte Störgrößen stark herabsenkt. Das Messsignal ermöglicht somit höchste Genauigkeiten und Auflösungen. Wiegand-Element und Zusatzsensor sehen hier den gemeinsamen Rückschlusskörper 14; Rückwirkungen des Wiegand-Elementes auf den Zusatzsensor werden auf diese Weise drastisch reduziert. Das zusätzliche Sensorelement SE liegt hier im Streufeld. Weil die Betriebsfeldstärken für Wiegandelement WE und Zusatzsensor ZS stark unterschiedlich sind, sind wegen eines optimalen Betriebs die beiden im ringförmigen Rückschlusskörper 14 sitzenden gleichen Magnete EM₁, EM₂ in Achsrichtung abgesetzt.

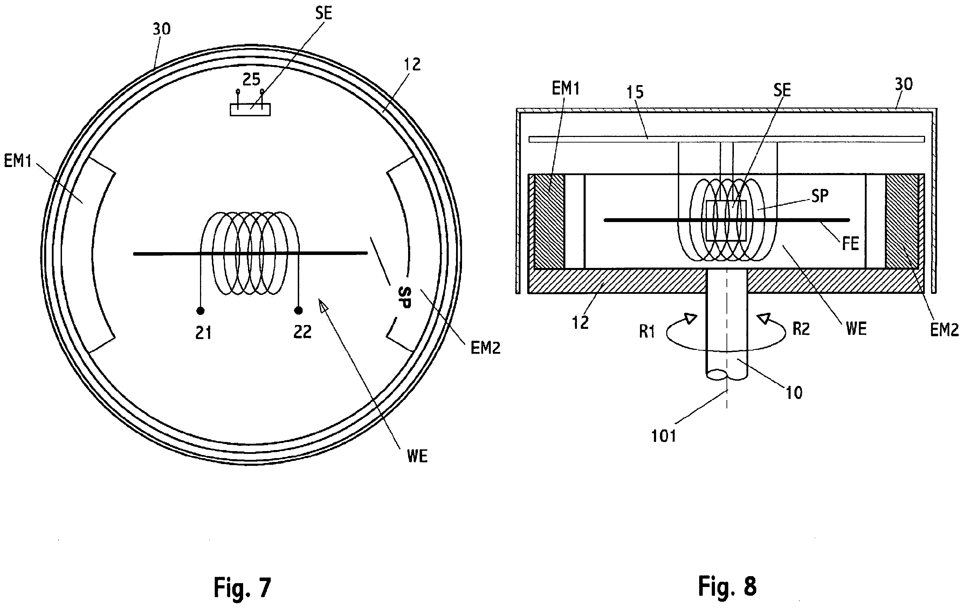

Für das Ausführungsbeispiel des Umdrehungszählers nach den Figuren 7 und 8 gilt Entsprechendes. Allerdings dient hier als ferromagnetischer Rückschlusskörper eine Haube 30, mittels der der Umdrehungszähler abgedeckt ist, und der Umdrehungszähler weist ein Wiegand-Elemente WE und eine Hallsonde als zusätzliches Sensorelement SE im Hauptfeld zwischen zwei gleichen Erregermagneten auf, wobei die Erregermagnete auf der Innenseite des Magnetträgers 12 angebracht sind. Es handelt sich hierbei in Bezug auf eine Gesamtabschirmung um eine kostengünstige Lösung.

Es ist eigentlich aufgrund der allgemeinen Definition des Patentanspruches 1 überflüssig, darauf hinzuweisen, dass auch Ausführungsformen mit mehreren Wiegandelementen, jedoch nur einem zusätzlichen Sensorelement, wobei die über die Anzahl 1 hinausgehenden Wiegandelemente zwar unnötig sind, aus Gründen des Schutzumfangs denkbar sind und unter den Schutzumfang dieses Schutzrechts fallen.

Das ferromagnetische Element kann beliebige Form und Länge besitzen. Auch eine um einen Winkel in Achsrichtung abgeknickter Draht ist denkbar.

### BEZUGSZEICHENLISTE

- 10: Welle
- 12: Magnetträger
- 13: Querstreben
- 14: Rückschlusskörper
- 15: Platine
- 16: Teile des Magnetträgers 12
- 17: Teile des Magnetträgers 12
- 21: Ausgangsklemme Wiegandspule SP
- 22: Ausgangsklemme Wiegandspule SP
- 23: Ausgangsklemme Spule als zusätzliches Sensorelement
- 24: Ausgangsklemme Spule als zusätzliches Sensorelement
- 25: Ausgangsklemmen Hallsensor
- 30: Haube
- 31: Gehäuse
- 40: ferromagnetischer Ausgleichskörper
- 101: Drehachse
- 102: Bewegungsachse
- WE: Wiegand-Element
- EM₁: Erregermagnet
- EM₂: Erregermagnet
- FE: ferromagnetisches Element
- HS: Hallsonde
- N: Nordpol
- S: Südpol
- R₁: Pfeil
- R₂: Pfeil
- SP: Wiegandsensorspule
- Ts: gleicher Zeitpunkt
- ZS: Zusatzsensor
- SE: zusätzliches Sensorelement (Hallsonde, Feldplatte)

## Patentansprüche

1. Absoluter Umdrehungszähler umfassend
- mindestens einen sich bewegenden Erregermagneten (EM₁);
- ein Wiegandelement (WE₁) bestehend aus einem ferromagnetischen Element (FE), das von einer Induktionsspule (SP₁) axial umschlossen ist;
- mindestens eine zusätzliche Sensoreinheit (SE);
- mindestens eine Zähleinheit mit nichtflüchtigem Datenspeicher;
zur Ermittlung von vollständigen Informationen für einen Zählwert und zur Eigenversorgung mit Energie für eine Verarbeitungselektronik, die Zähleinheit und das zusätzliche Sensorelement (SE),
wobei seine Bauelemente (EM, SE, WE, 12, 14) derart ausgebildet und angeordnet sind, dass das Wiegandelement (WE) mit der Achse seiner Spule (SP₁) und das zusätzliche Sensorelement (SE) mindestens einmal pro Umdrehung in Richtung des Hauptfeldes des mindestens einen Erregermagneten (EM₁) liegt, dessen magnetischer Rückschluss über einen ferromagnetischen Rückschlusskörper (14, 114) gebildet ist,
wobei sich die Längsmitte der Spule (SP₁) in der Drehachse innerhalb des Hauptfeldes befindet; und
wobei das Hauptfeld den in Richtung der Magnetisierungsnormale austretenden Magnetfluss bezeichnet und wobei die Magentisierungsnormale senkrecht zur Drehachse steht; und
wobei
der ferromagnetische Rückschlusskörper (14) ein den Erregermagneten (EM₁) bzw. die Erregermagnete (EM₁ und EM₂) umfassender geschlossener Ring aus Weicheisen mit hohem µᵣ ist; oder
der geschlossene ferromagnetische Rückschlusskörper aus Weicheisen als Haube (30) ausgebildet ist.

2. Zähler nach Anspruch 1, **dadurch gekennzeichnet, dass** das Wiegandelement (WE) im Hauptfeld zwischen jeweils zwei Erregermagneten (EM₁, EM₂) liegt, deren Magnetisierungsachsen als Normale durch den Schwerpunkt beider Erregermagneten (EM₁, EM₂) gehen.

3. Zähler nach Anspruch 1 oder 2, **dadurch gekennzeichnet, dass** die Anordnung mit Erregermagnet (EM₁) bzw. Erregermagneten (EM₁, EM₂), Rückschlusskörper (14), Magnetträger (12) und gegebenenfalls Ausgleichskörper (40) so ausgebildet ist, dass ihr Schwerpunkt in der Drehachse (101) liegt.

4. Zähler nach einem der Ansprüche 1 bis 3, **dadurch gekennzeichnet, dass** der Zähler mindestens zwei der Erregermagnete umfasst und dass die Erregermagnete (EM₁, EM₂) die gleichen magnetischen Daten und geometrischen Abmessungen aufweisen.

5. Zähler nach einem der Ansprüche 1 bis 3, **dadurch gekennzeichnet, dass** der Zähler mindestens zwei der Erregermagnete umfasst und dass die Erregermagnete (EM₁, EM₂) in axialer Richtung verschiedene Dicken besitzen.

6. Zähler nach einem der vorangehenden Ansprüche, **dadurch gekennzeichnet, dass** die Erregermagnete (EM₁, EM₂) aus kunststoffgebundenem hartmagnetischem Material, vorzugsweise Ba-Ferrit oder Co/Sm bestehen.

7. Zähler nach den vorangehenden Ansprüchen, **dadurch gekennzeichnet, dass** der Zähler zwei der Erregermagnete umfasst und dass das zusätzliche Sensorelement (SE) mindestens einmal pro Umdrehung im Streufeld eines der beiden Erregermagnete (EM₁, EM₂) liegt.

8. Zähler nach einem der vorangehenden Ansprüche, **dadurch gekennzeichnet, dass** das zusätzliche Sensorelement (SE) als Hallsonde, als Feldplatte oder als kapazitiver Sensor ausgebildet ist.

9. Zähler nach einem der vorangehenden Ansprüche, **dadurch gekennzeichnet, dass** der Zähler mindestens zwei der Erregermagnete und einen Zusatzsensor (ZS) umfasst und dass der als Feinsensor oder Feindrehwinkelsensor dienende Zusatzsensor (ZS) im Rahmen eines Multiturns, zwecks Auflösung der das Wiegand-Element beeinflussenden rotatorischen Bewegung im Hauptfeld zwischen jeweils zwei Erregermagneten (EM₁, EM₂) liegt.

10. Zähler nach Anspruch 9, **dadurch gekennzeichnet, dass** der Zusatzsensor (ZS) für die Feinauflösung als Feldplatte und/ oder Hallsonde ausgebildet ist oder auf kapazitiver Basis beruht.

11. Zähler nach Anspruch 9 oder 10, **dadurch gekennzeichnet, dass** der Zusatzsensor (ZS) die Aufgabe des zusätzlichen Sensorelements (SE) oder vice versa im Rahmen eines Multiturns übernimmt.

12. Zähler nach einem der vorangehenden Ansprüche, **dadurch gekennzeichnet, dass** dem Zähler mindestens ein Energiespeicher mit Ladeschaltung zugeordnet ist, wobei der Energiespeicher vorzugsweise mindestens einen Kondensator aufweist.

13. Zähler nach einem der vorangehenden Ansprüche, **dadurch gekennzeichnet, dass** das ferromagnetische Element (FE) ein Impuls- oder Wieganddraht ist, der vorzugsweise geradlinig oder in Achsrichtung leicht gebogen ist.

14. Zähler nach einem der vorangehenden Ansprüche, **dadurch gekennzeichnet, dass** der nichtflüchtige Speicher ein EEPROM und/oder FRAM ist.

15. Zähler nach einem der vorangehenden Ansprüche, **dadurch gekennzeichnet, dass** die vollständigen Informationen zur Ermittlung der Polarität und Bewegungsrichtung des mindestens einen Erregermagneten (EM₁) also zum Zählen, aus den Daten im nichtflüchtigen Speicher und den Daten aus den Signalen der Induktionsspule (SP) sowie dem zusätzlichen Sensorelement (SE) bestehen.

## Claims

1. Absolute revolution counter comprising
- at least one moving excitation magnet (EM1);
- a Wiegand element (WE1) consisting of a ferromagnetic element (FE) axially enclosed by an induction coil (SP1);
- at least one additional sensor unit (SE);
- at least one counting unit with non-volatile data memory;
for determining complete information for a counter value and for self-supply with energy for a processing electronics, the counter unit and the additional sensor element (SE),
wherein its components (EM, SE, WE, 12, 14) are designed and arranged in such a way that the Wiegand element (WE) with the axis of its coil (SP1) and the additional sensor element (SE) lie at least once per revolution in the direction of the main field of the at least one excitation magnet (EM1), the magnetic return of which is formed via a ferromagnetic return body (14, 114),
the longitudinal center of the coil (SP1) being located in the axis of rotation within the main field; and
where the main field denotes the magnetic flux exiting in the direction of the magnetization normal and where the magnetization normal is perpendicular to the axis of rotation; and wherein
the ferromagnetic return body (14) is a closed ring of soft iron with a high µᵣ embracing the excitation magnet (EM1) or the excitation magnets (EM1 and EM2), respectively; or
the closed ferromagnetic return body of soft iron is designed as a hood (30).

2. Counter according to claim 1, **characterized in that** the Wiegand element (WE) is located in the main field between each two excitation magnets (EM1, EM2), the magnetization axes of which pass as normal through the centre of gravity of both excitation magnets (EM1, EM2).

3. Counter according to claim 1 or 2, **characterized in that** the arrangement with excitation magnet (EM1) or excitation magnets (EM1, EM2), return body (14), magnet carrier (12) and optionally compensating body (40) is designed in such a way that its centre of gravity lies in the axis of rotation (101).

4. Counter according to any of claims 1 to 3, **characterized in that** the counter comprises at least two of the excitation magnets and **in that** the excitation magnets (EM1, EM2) have the same magnetic specification and geometric dimensions.

5. Counter according to one of claims 1 to 3, **characterized in that** the counter comprises at least two of the excitation magnets and **in that** the excitation magnets (EM1, EM2) have different thicknesses in axial direction.

6. Counter according to one of the preceding claims, **characterised in that** the excitation magnets (EM1, EM2) consist of plastic-bonded hard magnetic material, preferably Ba ferrite or Co/Sm.

7. Counter according to the preceding claims, **characterized in that** the counter comprises two of the excitation magnets and **in that** the additional sensor element (SE) lies at least once per revolution in the stray field of one of the two excitation magnets (EM1, EM2).

8. Counter according to one of the preceding claims, **characterized in that** the additional sensor element (SE) is designed as a Hall probe, as a field plate or as a capacitive sensor.

9. Counter according to one of the preceding claims, **characterized in that** the counter comprises at least two of the excitation magnets and an additional sensor (ZS), and **in that** the additional sensor (ZS), which serves as a fine sensor or fine rotation angle sensor, within the framework of a multiturn, for the purpose of resolving the rotational movement in the main field which influences the Wiegand element, is located in the main field between each two excitation magnets (EM1, EM2).

10. Counter according to claim 9, **characterized in that** the additional sensor (ZS) for the fine resolution is designed as a field plate and/or Hall probe or is based on a capacitive basis.

11. Counter according to claim 9 or 10, **characterized in that** the additional sensor (ZS) assumes the task of the additional sensor element (SE) or vice versa within the framework of a multiturn.

12. Counter according to one of the preceding claims, **characterized in that** at least one energy store with charging circuit is assigned to the counter, the energy store preferably having at least one capacitor.

13. Counter according to one of the preceding claims, **characterized in that** the ferromagnetic element (FE) is a pulse or Wiegand wire, preferably straight or slightly bent in axial direction.

14. Counter according to one of the preceding claims, **characterized in that** the non-volatile memory is an EEPROM and/or FRAM.

15. Counter according to one of the preceding claims, **characterized in that** the complete information for determining the polarity and direction of movement of the at least one excitation magnet (EM1), i.e. for counting, consists of the data in the non-volatile memory and the data from the signals of the induction coil (SP) and the additional sensor element (SE).

## Revendications

1. Compteur de tours absolu comprenant
- au moins un aimant d'excitation (EM₁) en mouvement ;
- un élément de Wiegand (WE₁) constitué d'un élément ferromagnétique (FE), qui est entouré de manière axiale par une bobine d'induction (SP₁) ;
- au moins une unité de capteur (SE) supplémentaire ;
- au moins une unité de comptage avec une mémoire de données non volatile ;
pour la détermination d'informations complètes pour une valeur de comptage et pour l'auto-alimentation en énergie pour une électronique de traitement, l'unité de comptage et l'élément de capteur (SE) supplémentaire,
**caractérisé en ce que** ses composants (EM, SE, WE, 12, 14) sont réalisés et disposés de telle manière que l'élément de Wiegand (WE) avec l'axe de sa bobine (SP₁) et l'élément de capteur (SE) supplémentaire se situent au moins une fois par tour en direction du champ principal d'au moins un aimant d'excitation (EM₁), dont le reflux magnétique est formé par l'intermédiaire d'un corps de reflux (14, 114) ferromagnétique,
le centre longitudinal de la bobine (SP₁) se situant dans l'axe de rotation à l'intérieur du champ principal ; et
le champ principal désignant le flux magnétique sortant en direction de la normale de magnétisation et la normale de magnétisation étant perpendiculaire par rapport à l'axe de rotation ; et
le corps de reflux (14) ferromagnétique étant un anneau fermé entourant l'aimant d'excitation (EM₁) ou les aimants d'excitation (EM₁ et EM₂), composé de fer doux avec un µᵣ élevé ; ou
le corps de reflux ferromagnétique fermé composé de fer doux étant réalisé sous la forme d'un capot (30).

2. Compteur selon la revendication 1, **caractérisé en ce que** l'élément de Wiegand (WE) se situe dans le champ principal entre respectivement deux aimants d'excitation (EM₁, EM₂), dont les axes de magnétisation en tant que normale traversent le centre de gravité des deux aimants d'excitation (EM₁, EM₂).

3. Compteur selon la revendication 1 ou 2, **caractérisé en ce que** l'ensemble avec l'aimant d'excitation (EM₁) ou les aimants d'excitation (EM₁, EM₂), le corps de reflux (14), le support d'aimant (12) et éventuellement un corps de compensation (40) est réalisé de telle sorte que son centre de gravité se situe dans l'axe de rotation (101).

4. Compteur selon l'une quelconque des revendications 1 à 3, **caractérisé en ce que** le compteur comprend au moins deux des aimants d'excitation, et que les aimants d'excitation (EM₁, EM₂) présentent les mêmes données magnétiques et dimensions géométriques.

5. Compteur selon l'une quelconque des revendications 1 à 3, **caractérisé en ce que** le compteur comprend au moins deux des aimants d'excitation, et que les aimants d'excitation (EM₁, EM₂) possèdent des épaisseurs différentes dans une direction axiale.

6. Compteur selon l'une quelconque des revendications précédentes, **caractérisé en ce que** les aimants d'excitation (EM₁, EM₂) sont constitués d'un matériau magnétique dur lié par une matière synthétique, de préférence de Ba-ferrite ou de Co/Sm.

7. Compteur selon les revendications précédentes, **caractérisé en ce que** le compteur comprend deux des aimants d'excitation, et que l'élément de capteur (SE) supplémentaire se situe au moins une fois par tour dans le champ de diffusion d'un des deux aimants d'excitation (EM₁, EM₂).

8. Compteur selon l'une quelconque des revendications précédentes, **caractérisé en ce que** l'élément de capteur (SE) supplémentaire est réalisé sous la forme d'une sonde à effet Hall, sous la forme d'une plaque de champ ou sous la forme d'un capteur capacitif.

9. Compteur selon l'une quelconque des revendications précédentes, **caractérisé en ce que** le compteur comprend au moins deux des aimants d'excitation et un capteur supplémentaire (ZS), et que le capteur supplémentaire (ZS) faisant office de capteur de précision ou de capteur d'angle de rotation de précision se situe, dans le cadre d'un multitour, aux fins de la résolution du déplacement en rotation influençant l'élément de Wiegand, dans le champ principal entre respectivement deux aimants d'excitation (EM₁, EM₂).

10. Compteur selon la revendication 9, **caractérisé en ce que** le capteur supplémentaire (ZS) est réalisé pour une résolution de précision sous la forme d'une plaque de champ et/ou sous la forme d'une sonde à effet Hall ou repose sur une base capacitive.

11. Compteur selon la revendication 9 ou 10, **caractérisé en ce que** le capteur supplémentaire (ZS) prend en charge la fonction de l'élément de capteur (SE) supplémentaire ou vice versa dans le cadre d'un multitour.

12. Compteur selon l'une quelconque des revendications précédentes, **caractérisé en ce qu'**au moins un accumulateur d'énergie avec un circuit de charge est associé au compteur, l'accumulateur d'énergie présentant de préférence au moins un condensateur.

13. Compteur selon l'une quelconque des revendications précédentes, **caractérisé en ce que** l'élément ferromagnétique (FE) est un fil métallique d'impulsion ou de Wiegand, qui est cintré de préférence de manière rectiligne ou légèrement dans la direction axiale.

14. Compteur selon l'une quelconque des revendications précédentes, **caractérisé en ce que** la mémoire non volatile est un EEPROM et/ou un FRAM.

15. Compteur selon l'une quelconque des revendications précédentes, **caractérisé en ce que** les informations complètes servant à déterminer la polarité et la direction de déplacement d'au moins un aimant d'excitation (EM₁) donc servant au comptage, sont constituées des données dans la mémoire non volatile et des données issues des signaux de la bobine d'induction (SP) ainsi que de l'élément de capteur (SE) supplémentaire.
